# EUROPEAN PATENT SPECIFICATION

(11) **EP 1 820 554 B1**
(45) Date of publication and mention of the grant of the patent: **29.04.2009**
(21) Application number: 07008645.9
(22) Date of filing: 24.01.2001
(51) Int. Cl.: B01D 39/20, B01D 53/04, B01D 53/02

(54) **Chemical filter and manufacturing method thereof**
Chemischer Filter und zugehöriges Herstellungsverfahren
Filtre chimique et son procédé de fabrication

(30) Priority: 31.01.2000 JP 2000021970; 21.02.2000 JP 2000042709
(43) Date of publication of application: 22.08.2007
(62) Divisional of application: 01101516.1
(73) Proprietor: Nichias Co., Ltd., Tokyo 105-8555 (JP)
(72) Inventor: Tanaka, Minoru, Yokohama-shi, Kanagawa 230-0053 (JP); Taniguchi, Takashi, Yokohama-shi, Kanagawa 230-0053 (JP); Sasaki, Haruko, Yokohama-shi, Kanagawa 230-0053 (JP); Nakano, Toshiro, Yokohama-shi, Kanagawa 230-0053 (JP)
(74) Representative: Müller-Wolff, Thomas

(56) References cited:
- WO-A-99/46029
- DE-A- 3 937 863
- DE-A- 4 028 531
- US-A- 4 886 769
- US-A- 4 992 319
- US-A- 5 194 414
- US-A- 5 212 131
- US-A- 5 698 165

## Description

### Background of the Invention

The present invention relates to a chemical filter and manufacturing method thereof for an air cleaner used in a clean room or in a device which is used in a clean room of a semiconductor manufacturing plant or a precision electronics manufacturing plant, for removing substances that might be harmful to semiconductors and precision electronic components and removing microscopic amounts of gaseous impurities.

Semiconductors and precision electronic components and the like are generally manufactured in clean rooms at semiconductor manufacturing plants or precision electronics manufacturing plants. Clean rooms generally employ HEPA filters and ULPA filters to separate inside air from outside air so as to maintain an environment that is free or near free of dust. Despite this, however, it is not possible to completely prevent outside air from entering a clean room. Moreover, acidic substances, alkaline substances, and organic substances generated from the members that make up the clean room are dispersed into the air in the form of gases and minute particulates, causing defects. Various methods are employed to remove these contaminants, such as using a chemical filter in the clean room for low concentration levels on or below the ppb order. In addition, gaseous impurities that must be removed are also generated by devices installed within the clean room which means that chemical filters must be installed in the devices themselves as well. While chemical filters do enable contaminants in the air within the clean room and devices to be removed, chemical filters themselves are a source of contamination as their construction material generate contaminants.

To solve this problem, a chemical filter and the like has been proposed (Japanese Patent Laid-Open Publication No. HEI 9-220425) that is provided with an adsorbent filter medium for removing gaseous impurities in the ventilating air and a filter medium comprising material which does not generate gaseous impurities and that is able to capture minute particulates generated from the adsorbent filter medium installed downstream of that adsorbent filter medium.

Even with this chemical filter installed, however, there are cases in which contaminants generated from the chemical filter itself are still not able to be sufficiently removed, which ultimately results in a decrease in yield of semiconductors and precision electronic components manufactured.

Further, in the manufacturing process of silicon wafers and so forth in semiconductor manufacturing plants, contaminants such as particulates and metal impurities in a clean room, which cause defects in devices with up to 64 megabytes of DRAM, are removed to an extremely high degree via HEPA filters and ULPA filters. Meanwhile, gaseous contaminants on the ppb level within a clean room are ultimately responsible for a reduction in the product yield of devices having 64 megabytes of DRAM or more. It is known that these gaseous contaminants come from various sources such as outside air, out gas from members that make up the clean room, and chemicals used in the manufacturing process.

Using chemical filters installed within the clean room is one method being used to remove low concentration levels of these gaseous contaminants of the ppb order or less. A chemical filter is a filter which removes gaseous contaminants by passing air in the clean room and in a device through a filter which is made of an adsorbent material such as active carbon. Gaseous contaminants are classified into acid, alkaline and organic substances. In order to efficiently remove these gaseous contaminants, a suitable adsorbent for adsorbing gas or a reactant for absorbing gas is usually selected to be used with the chemical filter.

For example, amines containing several tens of ppbs in the air enter the clean room along with the outside air. It is also known that basic gaseous contaminants such as amines are generated from chemicals used in the construction of clean rooms as well as in the manufacturing process. In a clean room, these basic gaseous contaminants which are 10 to 20 ppb cause photo resistance shape abnormalities (T top phenomenon), react with acidic gas to form salt, and generate condensation on the optical components of the systems used in the manufacturing process as well as on the surface of the silicon wafers. Using a chemical filter that deposits an acidic substance as a reactant for absorbing the gas enables basic gaseous contaminants such as amines to be removed. Meanwhile, acidic gaseous contaminants within a clean room promote the generation of boron by corroding glass fibers of dust removing filters, as well as cause metal corrosion of ICs and the like. To counteract these kinds of acidic gaseous contaminants, a chemical filter that deposits an alkali as a reactant for absorbing the gas is used to remove acidic gaseous contaminants.

Conventional chemical filters use granular active carbon charged in a filter case as a reactant for absorbing gas. These chemical filters, however, have several drawbacks. One such drawback is that the pressure loss is large. Furthermore, removal efficiency is poor due to the fact that the area of contact of the granular active carbon with the treated gas is small. While there are chemical filters of a honeycomb structure of corrugated nonwoven active carbon fiber, they have large pressure loss and are costly to manufacture. In order to maintain a high level of cleanliness in a clean room, air in the room is circulated by being passed through HEPA filters, ULPA filters, and chemical filters and so forth, but these filters have large pressure loss, require air blowers of increased capacity, and thus more energy for blowing the air.

In view of this, a chemical filter with little pressure loss, a large contact area and so forth has been proposed, wherein an organic fiber base paper containing granular active carbon to which a compound of active carbon powder and organic fiber has been added is formed into a honeycomb structure which is then impregnated with an aqueous solution in which inorganic acid and metallic salt able to neutralize gaseous contaminants are dissolved. Accordingly the chemical filter deposits a reactant such as this inorganic acid and metallic salt or the like in the active carbon. This chemical filter is advantageous in that it has a low density compared with a chemical filter having granular active carbon charged in the filter case, as well as enables pressure loss to be reduced.

Despite this, however, because a compound of organic fiber and active carbon has been added in the papermaking process, the amount of active carbon deposited on the aforementioned conventional chemical filter with the honeycomb structure is not able to be increased, with a large amount of active carbon deposited per unit area of paper being on the order of 40 g/m² with absorption on the order of 80 g/m². Accordingly, when the gas reactant is impregnated the amount of gas reactant deposited does not increase, it is difficult to achieve sufficient life of the filter and sufficient removal performance with respect to gaseous contaminants.

Document US-A-4 992 319 discloses a chemical filter exhibiting little pressure loss which is formed of a corrugated honeycomb structure provided with an adsorbent filter medium suitable for removing gaseous impurities and agglutinating organic substances in the air. The adsorbent filter medium is a fiber base paper having an interfiber void ratio of 80 to 95% which fiber base paper is obtained from a slurry. As a gas adsorbent and gas reactant activated carbon powder has been deposited on the fiber base paper at a rate of 50 to 350 kg/m³.

Therefore, an object of the present invention is to provide a chemical filter having superior removal performance with respect to gaseous contaminants while allowing only little pressure loss and having improved life, by markedly increasing the amount of active carbon which acts as an adsorbent, deposited such that the amount of reactant deposited is able to be increased when impregnated.

### DISCLOSURE OF THE INVENTION

In view of the above, through dedicated study the inventors ultimately succeeded in creating a chemical filter of a corrugated honeycomb structure according to claim 1.

A second aspect of the present invention is a method for manufacturing a chemical filter according to claim 5.

### BRIEF DESCRIPTION OF THE DRAWINGS

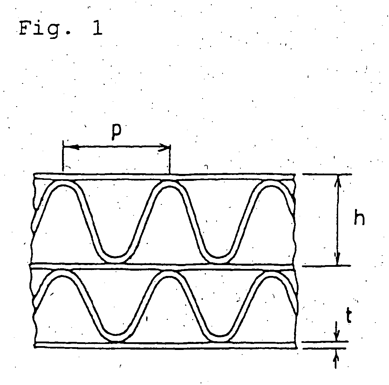

Fig. 1 is a side view of a portion of the corrugated honeycomb structure obtained with embodiment 1.

### DETAILED DESCRIPTION

First, the chemical filter will be described with reference to the foregoing first, second, aspects of the present invention. The chemical filter according to the invention is intended to be used to remove gaseous impurities and agglutinating organic substances from acidic gases and alkaline gases and so forth in the air. Here agglutinating organic substances refers to volatile organic substances floating in the air, wherein the surfaces thereof tend to agglutinate; e.g., dioctyl phthalate, dibutyl phthalate, dimethyl siloxane, hexamethyl disiloxane, N-methyl-2-pyrrolidone. The chemical filter is provided with an adsorbent filter medium for removing these gaseous impurities and agglutinating organic substances, and usually comprises an adsorbent filter medium and a member for depositing this adsorbent filter medium but is not limited thereto.

The adsorbent filter medium of the chemical filter according to the first invention is not particularly limited so long as it is a gas adsorbent or a gas adsorbent and a gas reactant deposited on a fiber base paper with an interfiber void fraction of 80 to 95% and is of a corrugated honeycomb structure. The fiber base paper is referred to as a woven or a nonwoven formed from fiber. Both inorganic fiber and organic fiber and the like may be used. Examples of inorganic fiber that may be used are glass fiber, such as E glass fiber, NCR fiber, ARG fiber, ECG fiber, S glass fiber, and A glass fiber, ceramic fiber, alumina fiber, mullite fiber, silica fiber, rock wool fiber, and carbon fiber. Examples of organic fiber that may be used are aramid fiber, nylon fiber, and polyethylene terephthalate fiber. It should be noted that while the invention is not limited to these inorganic fibers and organic fibers, a fiber length of 0.1 to 50 mm and a fiber diameter of 0.1 to 25 µm is preferable. One or a combination of two or more types of these inorganic fibers and organic fibers may be used.

The interfiber void fraction of the fiber base paper upon which the gas adsorbent or the gas adsorbent and the gas reactant is deposited is 80 to 95%, and more preferably 90 to 95%. Having the interfiber void fraction of the fiber based paper within this range enables the active carbon to be filled at a high ratio so as to close the voids between the fibers when the active carbon which act as the gas adsorbent, is deposited by coating in the voids between the fibers. The interfiber void fraction refers to the fraction of the difference between the apparent volume and the volume occupied by the fiber within the fiber base paper with respect to the apparent volume of the fiber base paper.

Potassium carbonate is used as the reactant for absorbing acidic gas.

The active carbon is used as the gas adsorbent. The active carbon is used for adsorbing agglutinating organic substances. The chemical filter using the active carbon as the gas adsorbent can remove agglutinating organic substances without the reactant such as an acid or a base, because the active carbon physically adsorbs agglutinating organic substances in its pores by van der Waals force and the like.

Next a method for manufacturing the chemical filter according to the invention will be described. First a fiber base paper with an interfiber void fraction of 80 to 95% is obtained. The fiber used is identical to that mentioned above. A slurry is then formed by dispersing one or two or more types of the inorganic or organic fiber in a solution into which has been added an organic binder such as polyvinyl alcohol and polyacrylamide or methyl cellulose. When forming the slurry, for example, the compound content of the organic binder is 5 to 25 parts by weight, preferably 10 to 15 parts by weight relative to 100 parts by weight fiber, and the compound content of the fiber is 0.5 to 3 wt%, preferably 0.5 to 1 wt% in the slurry because they enable superior papermaking and highly even interfiber spacing to be achieved. Next, the slurry is made into a fiber base paper (nonwoven fabric) according to a known method using a papermaking machine such as a cylinder machine. Setting the compound content of the organic binder with respect to the fiber in the aforementioned range makes it easy.to obtain a fiber base paper having an interfiber void fraction of 80 to 95%.

Next, active carbon is deposited on the fiber base paper having an interfiber void fraction of 80 to 95% such that the deposited amount is within a range of 40 to 150 g/m² per unit area of the fiber base paper, preferably in a range of 90 to 150 g/m². Also the water-absorption amount of the active carbon from this deposited active carbon is 100 to 160 g/m², more preferably 120 to 150 g/m². Depositing active carbon powder by coating it at a rate of 50 to 350 kg/m³, more preferably at a rate of 120 to 150 kg/m³ will enable the active carbon to be deposited in this range. A deposition amount and water-absorption amount of the active carbon in the above-mentioned ranges also increase the amount of impregnated gas reactant and enable superior gaseous contaminant removal performance to be achieved. The deposition method is a method for coating a suspended solution of the binder and active carbon powder and is preferable because a high ratio of active carbon is able to be deposited because the active carbon is charged so that it closes the voids between the fibers. A vinylidene chloride system binder or a vinyl chloride acrylic copolymerization system binder or the like may be used as the binder. Of these, a vinylidene chloride system binder is preferable because it displays excellent coating characteristics. Active carbon coated fiber base paper is then prepared by coating the fiber base paper with active carbon by application with a knife, brush, or roller, after which it is dried and heat treated. A temperature range of 70 to 120°C is sufficient for the heat treatment.

Continuing, the fiber base paper upon which the active carbon is deposited is formed into a corrugated honeycomb structure. First, the fiber base paper upon which the active carbon is deposited is divided into that which is to undergo the corrugation process and the part which is not. That which is to undergo the corrugation process is corrugated by being passed between a pair of upper and lower corrugated rollers. An adhesive is applied to the peaks of this corrugated fiber base paper which is then laid together with the flat fiber base paper that has not undergone the corrugation process so as to adhere the contacting portion of the peaks of the corrugated fiber base paper to the flat fiber base paper. Laminating a plurality of corrugated fiber base papers and the flat fiber base papers together creates a honeycomb structure having a specified open area ratio with respect to the direction of ventilation. An adhesive preferably used for adhesion should have suitable application and adhesion characteristics, and may be but is not limited to an organic adhesive such as a phenolic resin system, epoxy resin system, acrylic resin system, vinyl acetate resin system and a copolymer of these, or an inorganic adhesive such as silica sol or alumina sol. The adhesive is preferably one or more types selected from the group consisting of an organic system adhesive or an inorganic system adhesive. More specifically, it is preferable to use one or more types of an organic system adhesive selected from the group consisting of a phenol system resin, epoxy system resin, acrylic system resin and a copolymer of these, or one or more types of an inorganic system adhesive selected from the group consisting of silica sol and alumina sol. Also particularly preferable as an adhesive is an acrylic system copolymer resin. In addition, acid resistance can be further improved by using an acrylic system copolymer resin together with an inorganic adhesive. The cross sectional shape of the honeycomb structure may be circular or quadrangular or the like but is not limited thereto.

Next the gas reactant is deposited onto the corrugated honeycomb structure. The adsorbent filter medium containing alkali as a gas reactant may be obtained by submersing the honeycomb structure for from several minutes to several hours in an aqueous solution with a potassium carbonate content of several percent to several tens of percents or by absorption deposition by a washcoating or the like and then drying it. A suitable solution for dissolving the gas reactant, such as water or alcohol, is used. With the method of the invention, impregnating the gas reactant after the honeycomb structure is formed prevents the gas reactant from desorbing, therefore enabling a constant amount of deposition.

The chemical filter according to the invention comprises a corrugated honeycomb structure which acts as the adsorbent filter medium and a deposit member (casing) for depositing the adsorbent filter medium. The deposition member functions both to deposit the corrugated honeycomb structure and join the chemical filter to existing equipment (at the location of installation). The treated air ventilation portion of the deposition member is made of material such as degassed stainless steel, aluminum, or plastic.

The chemical filter according to the invention is further able to be provided with a dust removing filter for capturing at least minute particulates generated by the adsorbent filter medium downstream of the adsorbent filter medium. This enables particulate impurities generated by the adsorbent filter medium provided earlier in the path with respect to the direction of airflow to be removed by the dust removing filter provided later in the path. Providing the chemical filter according to the invention in a device or clean room of a semiconductor manufacturing plant further improves the yield of semiconductors and precision electronic components manufactured.

The chemical filter according to the : invention is preferably used as an air cleaner installed, for example, inside a device installed in a clean room or in a clean room of a semiconductor manufacturing plant or a precision electronic components manufacturing plant. This results in excellent gaseous contaminants removal performance, little pressure loss, and improved life of the filter. Accordingly, contaminants are removed from the semiconductors and precision electronic components thereby improving the yield.

## Claims

1. A chemical filter of little pressure loss of a corrugated honeycomb structure provided with an adsorbent filter medium for removing gaseous impurities and agglutinating organic substances in the air, wherein said adsorbent filter medium is a fiber base paper having an interfiber void ratio of 80 to 95%, obtained from a slurry containing 5 to 25 parts by weight, preferably 10 to 15 parts by weight, of an organic binder relative to 100 parts by weight fiber, the compound content of the fiber within said slurry being 0,5 to 3 wt%, preferably 0,5 to 1 wt%, on which fiber base paper activated carbon as a gas adsorbent and potassium carbonate as a gas reactant has been deposited, said deposited, activated carbon obtained by depositing active carbon powder on said fiber paper at a rate of 50 to 350 kg/m³, preferably 120 to 150 kg/m³.

2. A chemical filter according to claim 1, wherein said gas adsorbent has a deposition amount per unit area of said fiber base paper ranging from 40 to 150 g/m.

3. A chemical filter according to the previous claim, wherein the deposition amount ranges from 90 to 150 g/m².

4. A chemical filter according to any one of claims 1 through 3, wherein said fiber base paper comprises one or two or more types of material selected from the group consisting of glass fiber, ceramic fiber alumina fiber, mullite fiber, silica fiber, and organic fiber.

5. A method of manufacturing a chemical filter of little pressure loss, comprising the steps of:
obtaining fiber base paper from a slurry containing 5 to 25 parts by weight, preferably 10 to 15 parts by weight, of an organic binder relative to 100 parts by weight fiber, the compound content of the fiber within said slurry being 0,5 to 3 wt%, preferably
0,5 to 1 wt%, and having an interfiber void ratio of 80 to 95%, depositing active carbon powder on said fiber paper at a rate of 50 to 350 kg/m³, preferably 120 to 150 kg/m³, such that the amount of active carbon
ranges from 40 to 150 g/m² preferably 90 to 150 g/m² per unit area of said fiber base paper;
forming said fiber base paper upon which the active carbon has been deposited into a corrugated honeycomb structure; and
depositing potassium carbonate on said corrugated honeycomb structure,

6. A method of manufacturing a chemical filter according to claim 5, wherein:
said organic system adhesive is one or more types selected from the group consisting of phenol system resin, epoxy system resin, acrylic system resin and a copolymer of these, and
said inorganic system adhesive is one or more types selected from the group consisting of silica sol and alumina sol.

7. Method of manufacturing a chemical filter according to any of the claims 5 to 8, further comprising after depositing active carbon on the fiber base paper drying and subsequently heat-treating the fiber base paper at 70 to 120°C and for forming the honeycomb structure
- corrugating selected parts of the fiber base paper,
- applying an adhesive to the peaks of the corrugated parts,
- adhering the contacting portion of the peaks to the non-corrugated fiber base paper and laminating thus a plurality of corrugated and non-corrugated parts,

8. Method according to the previous claim, additionally comprising the steps of
- submerging the honeycomb structure for several minutes to several hours in an aqueous solution of potassium carbonate,
- removing the impregnated chemical filter and drying it.

## Patentansprüche

1. Chemischer Filter mit geringem Druckverlust, aus einer gewellten Honigwabenstruktur, versehen mit einem adsorbierenden Filtermedium zur Entfernung von gasförmigen Verunreinigungen und agglutinierenden organischen Substanzen aus der Luft, wobei das adsorbierende Filtermedium ein Faser-Rohpapier ist, das eine Zwischenfaser-Porenziffer von 80 % bis 95 % aufweist und das aus einer Suspension erhalten wurde, die 5 bis 25 Gewichtsteile, vorzugsweise 10 bis 15 Gewichtsteile, bezogen auf 100 Gewichtsteile Fasern, eines organischen Bindemittels enthält, wobei der Gehalt der Faser in der Suspension 0,5 bis 3 Gew.-%, vorzugsweise 0,5 bis 1 Gew.-%, beträgt, und wobei auf dem Faser-Rohpapier Aktivkohle als Gasadsorbens und Kaliumcarbonat als Gasreaktant aufgebracht wurde, wobei die aufgetragene Aktivkohle durch Auftragen von Aktivkohlepulver auf das Faserpapier mit einer Geschwindigkeit von 50 bis 350 kg/m³, vorzugsweise 120 bis 150 kg/m³ erhalten wird.

2. Chemischer Filter nach Anspruch 1, bei welchem die Auftragsmenge des Gasadsorbens pro Flächeneinheit des Faser-Rohpapiers im Bereich von 40 bis 150 g/m² liegt.

3. Chemischer Filter nach dem vorhergehenden Anspruch, bei welchem die Auftragsmenge im Bereich von 90 bis 150 g/m² liegt.

4. Chemischer Filter nach einem der Ansprüche 1 bis 3, bei welchem das Faser-Rohpapier eine Materialart oder zwei oder mehrere Materialarten umfasst, die aus der Gruppe ausgewählt ist/sind, welche aus Glasfaser, Keramikfaser, Aluminiumoxidfaser, Mullitfaser, Quarzglasfaser und organischen Fasern besteht.

5. Verfahren zur Herstellung eines chemischen Filters, der einen geringen Druckverlust aufweist, umfassend die folgenden Schritte:
Herstellen von Faser-Rohpapier aus einer Suspension, die 5 bis 25 Gewichtsteile, vorzugsweise 10 bis 15 Gewichtsteile, bezogen auf 100 Gewichtsteile Fasern, eines organischen Bindemittels enthält, wobei der Gehalt der Faser in der Suspension 0,5 bis 3 Gew.-%, vorzugsweise 0,5 bis 1 Gew.-%, beträgt, und das Faser-Rohpapier eine Zwischenfaser-Porenziffer von 80 bis 95 % aufweist,
Auftragen von Aktivkohlepulver auf das Faserpapier mit einer Geschwindigkeit von 50 bis 350 kg/m³, vorzugsweise 120 bis 150 kg/m³, so dass die Menge an Aktivkohle im Bereich von 40 bis 150 g/m², vorzugsweise 90 bis 150 g/m² pro Flächeneinheit des Faser-Rohpapiers liegt;
Formung des Faser-Rohpapiers, auf welchem die Aktivkohle aufgetragen wurde, zu einer gewellten Honigwabenstruktur; und
Aufbringen von Kaliumcarbonat auf die gewellte Honigwabenstruktur.

6. Verfahren zur Herstellung eines chemischen Filters nach Anspruch 5, wobei:
es sich bei dem organischen Systemklebstoff um eine oder mehrere Klebstoffarten handelt, die aus der Gruppe ausgewählt sind, welche aus Phenolsystemharz, Epoxidsystemharz, Acrylsystemharz und einem Copolymer dieser Harze besteht, und
es sich bei dem anorganischen Systemklebstoff um eine oder mehrere Klebstoffarten handelt, die aus der Gruppe ausgewählt sind, welche aus Kieselsol und Aluminiumoxidsol besteht.

7. Verfahren zur Herstellung eines chemischen Filters nach einem oder mehreren der Ansprüche 5 bis 6, weiterhin umfassend, nach dem Auftragen von Aktivkohle auf das Faser-Rohpapier, die Trocknung und anschließende Hitzebehandlung des Faser-Rohpapiers bei 70 bis 120 °C, und, zur Formung der Honigwabenstruktur
- das wellen ausgewählter Teile des Faser-Rohpapiers,
- das Auftragen eines Klebstoffs auf die Spitzen der gewellten Teile,
- das Ankleben des Kontaktbereichs der Spitzen an das nicht gewellte Faser-Rohpapier und, auf diese Weise, das Laminieren einer Mehrzahl von gewellten und nicht gewellten Teilen.

8. Verfahren nach dem vorhergehenden Anspruch, zusätzlich umfassend die Schritte:
- Eintauchen der Honigwabenstruktur für einen Zeitraum von wenigen Minuten bis zu mehreren Stunden in eine wässrige Lösung von Kaliumcarbonat,
- Entnehmen des imprägnierten chemischen Filters und Trocknen des Filters.

## Revendications

1. Filtre chimique à faible perte de charge, à structure gaufrée en nid d'abeille, doté d'un milieu filtrant adsorbant pour éliminer les impuretés gazeuses et agglutiner les substances organiques présentes dans l'air, où ledit milieu filtrant adsorbant est un papier à base de fibres ayant un rapport de vide interfibre de 80 à 95 %, obtenu à partir d'une suspension épaisse contenant de 5 à 25 parties en poids, de préférence de 10 à 15 parties en poids, d'un liant organique pour 100 parties en poids de fibres, la teneur-composé de la fibre à l'intérieur de ladite suspension épaisse étant de 0,5 à 3 % en poids, de préférence de 0,5 à 1 % en poids, sur le papier à base de fibres duquel il a été déposé du charbon actif en tant qu'adsorbant de gaz et du carbonate de potassium en tant que réactif avec du gaz, ledit charbon actif, déposé, étant obtenu par dépôt d'une poudre de charbon actif sur ledit papier à base de fibres à raison de 50 à 350 kg/m³, de préférence à raison de 120 à 150 kg/m³.

2. Filtre chimique selon la revendication 1, dans lequel ledit adsorbant gaz de a une quantité de dépôt par surface unitaire dudit papier à base de fibres allant de 40 à 150 g/m².

3. Filtre chimique selon les revendications précédentes, dans lequel la quantité de dépôt se situe dans la plage allant de 90 à 150 g/m².

4. Filtre chimique selon l'une quelconque des revendications 1 à 3, dans lequel ledit papier à base de fibres comprend un ou deux types de matériaux, ou plus, sélectionnés dans le groupe constitué de fibre de verre, fibre céramique, fibre d'alumine, fibre de mullite, fibre de silice et fibre organique.

5. Procédé de fabrication d'un filtre chimique à faible perte de charge comprenant les étapes de :
obtention d'un papier à base de fibres à partir d'une suspension épaisse contenant de 5 à 25 parties en poids, de préférence de 10 à 15 parties en poids d'un liant organique pour 100 parties en poids de fibres, la teneur-composé de la fibre à l'intérieur de ladite suspension épaisse étant de 0,5 à 3 % en poids, de préférence de 0,5 à 1 % en poids, et ayant un rapport de vide interfibre de 80 à 95%;
dépôt d'une poudre de charbon actif sur ledit papier à base de fibres à raison de 50 à 350 kg/m³, de préférence de 120 à 150 kg/m³, de telle sorte que la quantité de charbon actif se situe dans la plage de 40 à 150 g/m², de préférence de 90 à 150 g/m² par surface unitaire dudit papier à base de fibres ;
formation dudit papier à base de fibres sur lequel le charbon actif a été déposé en une structure gaufrée en nid d'abeille ; et
dépôt de carbonate de potassium sur ladite structure gaufrée en nid d'abeille.

6. Procédé de fabrication d'un filtre chimique selon la revendication 5, dans lequel :
ledit adhésif du système organique est un ou plusieurs types choisis dans le groupe constitué d'une résine de système phénol, d'une résine de système époxy, d'une résine de système acrylique et d'un copolymère de celles-ci, et
ledit adhésif du système organique est un ou plusieurs types choisis dans le groupe constitué d'un sol de silice et un sol d'alumine.

7. Procédé de fabrication d'un filtre chimique selon l'une quelconque des revendications 5 à 6, comprenant, en outre, par la suite un dépôt de charbon actif sur le papier à base de fibres, un séchage et traitement thermique consécutif du papier à base de fibres à une température de 70 à 120 °C et pour former la structure en nid d'abeille,
- gaufrage des parties choisies du papier à base de fibres,
- application d'un adhésif aux crêtes des parties gaufrées,
- mise en adhérence de la partie faisant contact des crêtes avec le papier à base de fibres non gaufré et contre-collage ainsi d'une pluralité de parties gaufrées et non gaufrées.

8. Procédé selon la revendication précédente comprenant, en outre, les étapes de :
- immersion de la structure en nid d'abeilles pendant plusieurs minutes à plusieurs heures dans une solution aqueuse de carbonate de potassium,
- retrait du filtre chimique imprégné puis séchage.
